**Europäisches Patentamt**

**European Patent Office**

**Office européen des brevets**

(11) Numéro de publication : **0 593 349 A1**

(19)

(12)
# DEMANDE DE BREVET EUROPEEN

(21) Numéro de dépôt : **93402500.8**

(22) Date de dépôt : **11.10.93**

(51) Int. Cl.⁵ : **G02F 2/00**

(30) Priorité : **12.10.92 FR 9212135**

(43) Date de publication de la demande :
**20.04.94 Bulletin 94/16**

(84) Etats contractants désignés :
**DE GB**

(71) Demandeur : **FRANCE TELECOM**
**6, Place d'Alleray**
**F-75015 Paris (FR)**

(72) Inventeur : **Loualiche, Slimane**
**Rue Park Moan**
**F-22300 Lannion (FR)**
Inventeur : **Clerot, Fabrice**
**Le Golven**
**F-22500 Louannec (FR)**

(74) Mandataire : **Martin, Jean-Jacques**
**Cabinet REGIMBEAU 26, Avenue Kléber**
**F-75116 Paris (FR)**

(54) **Dispositif optique multiplicateur de fréquence.**

(57)     La présente invention concerne un dispositif multiplicateur de fréquence caractérisé par le fait qu'il comprend : des moyens (10, 20) de déphasage aptes à créer des déphasages périodiques sur un signal optique, et des moyens de combinaison (35, 36, 37) aptes à combiner le signal issu des moyens de déphasage et un signal de référence (32).

FIG.1

La présente invention concerne un dispositif optique multiplicateur de fréquence.

Le but principal de la présente invention est de proposer un dispositif optique qui permette d'obtenir un facteur multiplicateur de fréquence élevé, par exemple de l'ordre de plusieurs centaines.

Un autre but de la présente invention est de proposer un dispositif qui permette d'obtenir une fréquence élevée, par exemple jusqu'au THz.

Ce but est atteint dans le cadre de la présente invention grâce à un dispositif qui comprend:

- des moyens de déphasage aptes à créer des déphasages périodiques sur un signal optique, et

- des moyens de combinaison aptes à combiner le signal issu des moyens de déphasage et un signal de référence.

Comme on le montrera plus loin, le dispositif conforme à la présente invention permet d'obtenir à la sortie des moyens de combinaison un signal dont la fréquence est le produit de la fréquence de modulation du déphasage par l'amplitude de ce déphasage exprimée en longueurs d'onde du signal d'origine, moins un.

Selon une autre caractéristique avantageuse de la présente invention, les moyens de déphasage sont formés par la combinaison d'un dispositif de balayage rapide et d'un réseau de diffraction.

D'autres caractéristiques, buts et avantages de la présente invention apparaîtront à la lecture de la description détaillée qui va suivre, et en regard des dessins annexés, donnés à titre d'exemples non limitatifs et sur lesquels:

- la figure 1 représente une vue schématique en perspective d'un dispositif conforme à la présente invention,

- la figure 2 montre superposées une dent de scie de balayage et une représentation d'interférences obtenues à l'aide d'un dispositif conforme à la présente invention, et

- la figure 3 représente les mêmes interférences à une échelle différente.

Le dispositif conforme à la présente invention repose sur le principe suivant:

Un champ modulé peut s'écrire sous la forme:

$$Ea = E_0 \exp(j\, 2\, \pi(Ft - x/\lambda))$$

tandis que le champ de référence peut s'écrire:

$$Eb = E_0 \exp(-j\, 2\, \pi\, L/\lambda)$$

avec:

F: fréquence de modulation (période T = 1/F)
$\lambda$: longueur d'onde de la lumière
x: chemin optique variable
L: chemin optique de référence

En combinant les deux faisceaux Ea et Eb, on obtient un champ électrique de la forme:

$$E = Ea + Eb = 2E_0 \exp[j\, \pi\, (Ft - (x + L/\lambda)]\cos[\pi\, (Ft - (x - L)/\lambda)]$$

L'intensité lumineuse s'écrit alors:

$$I = E^2 = 4\, E_0^2 \cos^2[\pi\, (Ft - (x - L)/\lambda)]$$

Prenons l'hypothèse qu'à chaque instant t, on fait parcourir au signal lumineux un chemin optique différent. On peut choisir ce chemin optique avec une expression de la forme:

$$x = L + at$$

Supposons qu'on aille plus loin dans le choix du chemin optique et que celui-ci soit périodique. Sur une période (T) de la modulation d'amplitude, on souhaite obtenir une variation du chemin optique de plusieurs longueurs d'ondes. Soit pour fixer les idées:

$$x(T) - x(0) = N\lambda$$
$$aT = N\lambda \text{ ou } a = NF\lambda$$

L'expression de l'intensité lumineuse s'écrira:

$$I = 4E_0^2\cos^2(\pi\, (Ft - NFt))$$
$$I = 2E_0^2(1 + \cos(2\, \pi\, (N - 1)Ft)$$

Cette expression montre qu'en séparant un faisceau en deux, en faisant parcourir à l'un des deux bras un chemin optique périodique de fréquence F = 1/T et d'amplitude N$\lambda$ et à l'autre un chemin fixe et en recombinant ces deux bras on obtient un signal modulé en amplitude de fréquence (N-1)F: on a réalisé un multiplicateur de fréquence.

En d'autres termes, si on peut faire suivre entre deux points fixes un chemin optique continûment variable en fonction du temps à un faisceau lumineux, on aboutit à une modulation de phase de ce faisceau.

En utilisant un faisceau de référence pour lire cette modulation de phase à l'aide d'interférences, on aboutit à une modulation d'amplitude.

Et, comme on l'a montré précédemment, la vitesse de cette modulation d'amplitude est le produit de la fréquence de modulation du déphase par l'amplitude de ce déphasage exprimée en longueurs d'onde, moins un.

A titre indicatif, si l'on prend par exemple une variation de chemin optique d'amplitude égale à 1mm pour une lumière ayant une longueur d'onde de $\lambda$ = 1.000nm, donc de valeur 1.000$\lambda$, une modulation à 100MHz se traduira après interférence par une variation du signal à 100GHz-100MHz (N = 1.000).

Pour opérer cette multiplication de fréquence, le dispositif conforme à la présente invention peut comprendre des moyens assurant une modulation mécanique du trajet de la lumière, par exemple à base de lignes à retard, permettant de créer de grands déphasages périodiques (de l'ordre de 1.000 longueurs d'onde).

Toutefois, ces dispositifs ne présentent généralement qu'une très faible fréquence (moins de 10KHz).

Dans ce cas, la modulation d'amplitude ne saurait dépasser quelques dizaines de MHz.

Le dispositif conforme à la présente invention peut également comprendre des moyens présentant des effets non linéaires qui, pour des tensions de commande admissibles, permettent de créer de faibles déphasages (de l'ordre d'une longueur d'onde), mais avec des fréquences maximales de modulation de l'ordre de 20GHz. Dans ce cas, la vitesse de modulation d'amplitude n'est limitée que par la modulation électrique de l'effet non linéaire.

Toutefois, pour permettre d'obtenir une modulation d'amplitude rapide, c'est-à-dire de faire subir, entre deux points fixes, de grands déphasages périodiques à un faisceau lumineux, il est proposé dans le cadre de la présente invention un dispositif préférentiel formé par la combinaison d'un dispositif de balayage rapide et d'un réseau de diffraction .

Le dispositif de balayage rapide peut présenter une fréquence de modulation comprise entre 10MHz et 1GHz. De son côté, le réseau de diffraction peut permettre de créer de grands déphasages typiquement de l'ordre de 1.000 longueurs d'onde.

Le dispositif conforme à la présente invention permet donc d'obtenir une fréquence pouvant aller jusqu'au THz.

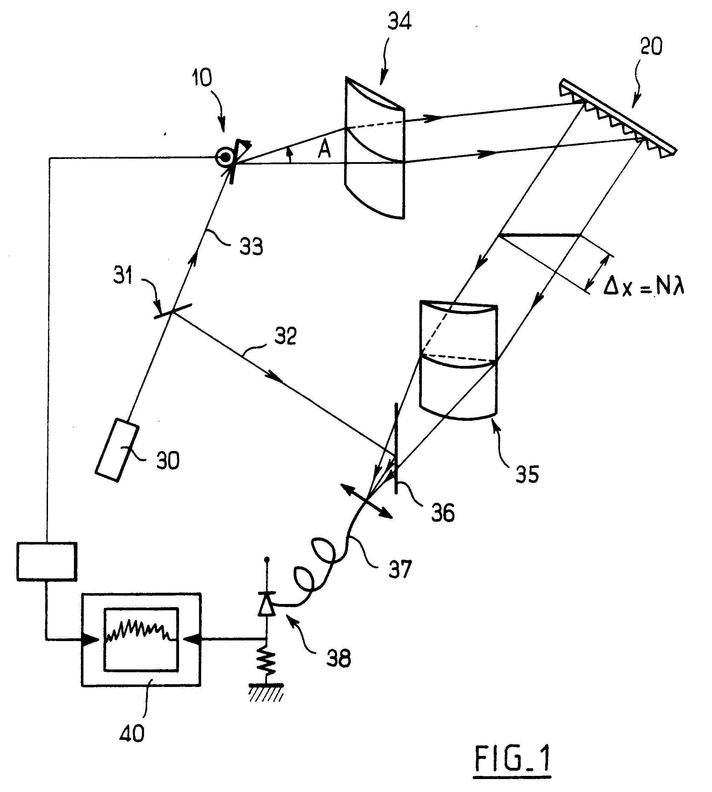

On retrouve sur la figure 1 annexée le mode de réalisation préférentiel de la présente invention comprenant en combinaison un dispositif de balayage rapide 10 et un réseau de diffraction 20.

Selon la figure 1, le faisceau lumineux d'origine est généré par un laser 30.

Le faisceau lumineux provenant du laser 30 est séparé, par un miroir sélectif 31, en deux composantes 32, 33 qui composeront respectivement le faisceau de référence et le faisceau de travail.

Le faisceau de travail 33 est envoyé sur le dispositif de balayage 10. Ce dispositif de balayage 10 peut être formé de différentes structures. Il est formé par exemple d'un miroir tournant.

Le dispositif de balayage 10 fait ainsi parcourir périodiquement un angle A au faisceau de travail 33.

Une lentille cylindrique 34, ayant son foyer au point d'arrivée du faisceau sur le miroir 10 et son axe de cylindre générateur perpendiculaire à la direction de balayage, est placée en aval du miroir 10 en regard de l'angle A parcouru par le faisceau balayé.

Le faisceau balayé est ainsi rendu parallèle par cette première lentille 34, comme représenté sur la figure 1.

Ce faisceau parallèle est envoyé sur le réseau 20 diffractant par réflexion.

Le réseau 20 crée ainsi une différence de marche qui est différente entre les deux bords du faisceau.

Le plan de phase du faisceau émergeant du réseau 20 est donc incliné.

De cette façon, le réseau diffractant 20 crée la différence de marche souhaitée entre la position du faisceau au commencement du balayage et sa position à la fin du balayage, soit sur l'angle de balayage A.

Le faisceau issu du réseau 20 est refocalisé par une lentille cylindrique adequate 35 ayant son axe de cylindre générateur perpendiculaire à la direction de propagation du faisceau issu du réseau 20.

De préférence, le faisceau focalisé en sortie de la lentille 35 est recombiné avec le faisceau de référence grâce à un miroir sélectif 36 et injecté dans une fibre optique 37 créant ainsi par interférence un faisceau modulé en amplitude.

Le faisceau combiné est avantageusement envoyé sur une photodiode 38.

Le signal récupéré sur la photodiode 38 peut être utilisé à diverses fins, selon que le dispositif conforme à la présente invention est utilisé en tant que multiplicateur de fréquence ou générateur de fréquence élevée.

De même, l'injection dans la fibre optique 37 n'est pas indispensable, la multiplication de fréquence étant obtenue dès la combinaison des signaux par le miroir 36.

Sur la figure 1, on a schématisé un oscilloscope de contrôle 40 recevant le signal issu de la photodiode et synchronisé comme référence de déclenchement par le générateur de commande du miroir tournant 10.

Si le générateur de balayage du miroir fonctionne à une fréquence F, le signal observé à l'oscilloscope 40, en sortie de la photodiode 38, est à la fréquence $(N - 1)F$.

Le nombre N représente la différence de marche totale exprimée en longueurs d'onde du faisceau à la fin du balayage par rapport au faisceau au début du balayage.

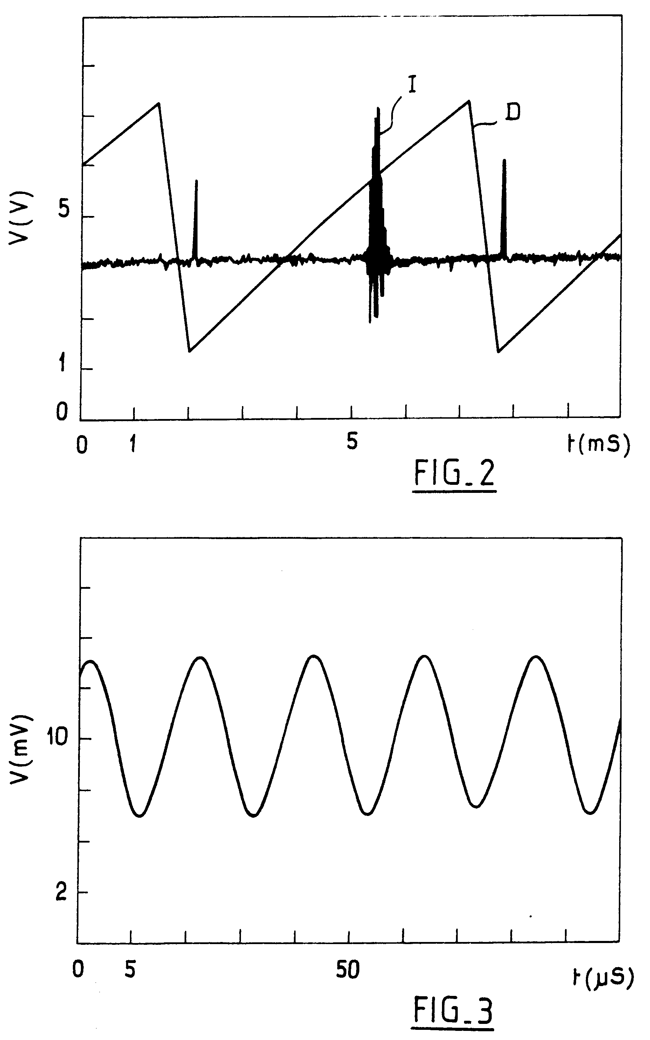

La figure 2 annexée montre sous la référence D la dent de scie du balayage sur une première courbe, et sous la référence I une représentation des interférences sur une deuxième courbe.

La représentation de la courbe des interférences I sur une échelle développée adequate, comme montré sur la figure 3, permet de mesurer la durée d'une période d'interférences.

Dans le cas expérimental correspondant aux représentations des figures 2 et 3, la période de balayage du miroir était de 5,8ms et la période des interférences de 0,01046ms, ce qui donne un coefficient de multiplication N = 554.

Bien entendu, la présente invention n'est pas limitée au mode de réalisation particulier qui vient d'être décrit, mais s'étend à toutes variantes conformes à son esprit.

En particulier, l'invention n'est pas limitée au mode de réalisation particulier représenté sur la figure 1 annexée, mais s'étend à tout dispositif apte à créer un chemin optique périodique avec une variation continue de ce chemin optique à l'intérieur d'une période et à combiner le faisceau ainsi obtenu avec un faisceau lumineux de référence pour former un multiplicateur de fréquence.

En pratique, le miroir de balayage 10 peut être remplacé par tout moyen équivalent électro-optique ou acousto-optique.

**Revendications**

1. Dispositif multiplicateur de fréquence caractérisé par le fait qu'il comprend:
   - des moyens (10, 20) de déphasage aptes à créer des déphasages périodiques sur un signal optique, et
   - des moyens de combinaison (35, 36, 37) aptes à combiner le signal issu des moyens de déphasage et un signal de référence (32).

2. Dispositif selon la revendication 1 caractérisé par le fait que les moyens de déphasage comprennent un dispositif de balayage rapide (10) et un réseau de diffraction (20).

3. Dispositif selon l'une des revendications 1 ou 2 caractérisé par le fait que le signal optique objet du déphasage périodique et le signal de référence sont issus d'un laser (30) commun et séparés en sortie de celui-ci par un séparateur sélectif (31).

4. Dispositif selon l'une des revendications 1 à 3 caractérisé par le fait que les moyens de déphasage comprennent un dispositif de balayage (10) formé d'un miroir tournant.

5. Dispositif selon la revendication 2 caractérisé par le fait qu'il est prévu une lentille (34) entre le dispositif de balayage rapide (10) et le réseau de diffraction (20), adaptée pour rendre parallèle le faisceau issu du dispositif de balayage rapide avant que ce faisceau n'atteigne le réseau de diffraction (20).

6. Dispositif selon l'une des revendications 1 à 5 caractérisé par le fait qu'il comprend une lentille de focalisation (35) entre les moyens de déphasage (10, 20) et les moyens de combinaison (36, 37).

7. Dispositif selon la revendication 1 caractérisé par le fait que les moyens de déphasage opèrent une modulation mécanique du trajet de la lumière.

8. Dispositif selon la revendication 7 caractérisé par le fait que les moyens de déphasage comprennent une ligne à retard.

9. Dispositif selon la revendication 1 caractérisé par le fait que les moyens de déphasage opèrent par effet non linéaire.

$\Delta x = N\lambda$

FIG.1

FIG. 2

FIG. 3

Office européen

des brevets

**RAPPORT DE RECHERCHE EUROPEENNE**

Numero de la demande

EP 93 40 2500

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | US-A-4 468 766 (A.SPEZIO) <br> * abrégé; revendications 1-13; figures 1-4 * | 1,3,9 | G02F2/00 |
| A | US-A-3 267 284 (L.MACKTA) <br> * colonne 2; figure 1 * | 1,5,6 | |
| A | IEEE PHOTONICS TECHNOLOGY LETTERS <br> vol. 2, no. 10 , Octobre 1990 , NEW YORK US <br> pages 762 - 765 <br> Y.SAKAI ET AL. 'SMALL-FREQUENCY-DIFFERENCE STABILIZATION OF LASER DIODES USING 12 C2H2 AND 13C2H2 ABSORPTION LINES FOR TRANSMITTER AND LOCAL OSCILLATOR OF OPTICAL HETERODYNE SYSTEMS' <br> * abrégé; figures 1-5 * | 1 | |

**DOMAINES TECHNIQUES RECHERCHES (Int.Cl.5)**

G02F

Le présent rapport a été établi pour toutes les revendications

| Lieu de la recherche | Date d'achèvement de la recherche | Examinateur |
|---|---|---|
| LA HAYE | 15 Novembre 1993 | MALIC, K |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)